# EUROPEAN PATENT SPECIFICATION

(11) **EP 3 049 914 B1**
(45) Date of publication and mention of the grant of the patent: **12.08.2020**
(21) Application number: 14850053.1
(22) Date of filing: 25.09.2014
(51) Int. Cl.: G06F 16/93, G06Q 10/10

(54) **USER-INITIATED DATA RECOGNITION AND DATA CONVERSION PROCESS**
BENUTZERINITIIERTE DATENERKENNUNG UND DATENUMWANDLUNGSVERFAHREN
PROCÉDÉ DE RECONNAISSANCE DE DONNÉES ET DE CONVERSION DE DONNÉES LANCÉ PAR L'UTILISATEUR

(30) Priority: 25.09.2013 US 201361882522 P
(43) Date of publication of application: 03.08.2016
(73) Proprietor: Chartspan Medical Technologies, Inc., Greenville, South Carolina 29601 (US)
(72) Inventor: CARTER, Jon-Michial, Greenville, SC 29601 (US); LAWLESS, David Van, Greenville, SC 29601 (US); EVDOKIMOV, Ilya, Fremont, California 94555 (US)
(74) Representative: Mansfield, Peter Turquand
(86) International application number: PCT/US2014/057459
(87) International publication number: WO 2015/048291

(56) References cited:
- US-A1- 2004 098 664
- US-A1- 2009 132 590
- US-A1- 2011 320 317
- US-A1- 2012 288 190
- US-A1- 2013 033 521
- US-A1- 2013 135 332
- STEFAN KLINK ET AL: "Document Structure Analysis Based on Layout and Textual Features", PROCEEDINGS OF INTERNATIONAL WORKSHOP ON DOCUMENT ANALYSIS SYSTEMS, 31 December 2000 (2000-12-31), pages 99-111, XP055351183, DOI: 10.1.1.37.9469
- HERVÉ DÉJEAN ET AL: "A System for Converting PDF Documents into Structured XML Format", 1 January 2006 (2006-01-01), DOCUMENT ANALYSIS SYSTEMS VII LECTURE NOTES IN COMPUTER SCIENCE;;LNCS, SPRINGER, BERLIN, DE, PAGE(S) 129 - 140, XP019027964, ISBN: 978-3-540-32140-8 * the whole document *
- JIAN LIANG ET AL: "Camera-based analysis of text and documents: a survey", INTERNATIONAL JOURNAL OF DOCUMENT ANALYSIS AND RECOGNITION (IJDAR), SPRINGER, BERLIN, DE, vol. 7, no. 2-3, 1 July 2005 (2005-07-01), pages 84-104, XP019352711, ISSN: 1433-2825, DOI: 10.1007/S10032-004-0138-Z
- Anonymous: "Doc Scanner - OCR/ Convert Pictures to Editable Text on iPhone/iPod", , 16 November 2010 (2010-11-16), page 1, XP055470316, Retrieved from the Internet: URL:https://www.youtube.com/watch?v=IrqfXi JABqQ [retrieved on 2018-04-25]

## Description

### BACKGROUND OF THE INVENTION

### Field of the Invention

This invention relates to the field of data recognition and Data Conversion and more specifically to the field of user-initiated data recognition and Data Conversion from digital transfers/representations of physical documents on a mobile device.

### Background of the Invention

Physical documents suffer many well-known drawbacks. For example, transferring a physical document from one location to another requires the physical transfer of the document. Moreover, should the physical document be requested, it would also need to be retrieved. The use of digital documents provides solutions to these common issues. However, the transfer of information from a physical document to a digital format may be time-consuming and costly. Data integration solutions have been developed that may mitigate the time and expense of data transfer, however these solutions rely on the physical documents possessing a common template or format in order to automate the process. Outside of these common templates, the automation process may not function (i.e., the data may not be isolated and extracted) on a mobile device.

US 2009/0132590 A1 (Huang) describes a way of obtaining information from documents, in which a document is imaged; the image is then subjected to OCR to produce a text version; and the text is automatically indexed, so it can be searched. The original image is stored along with the digitised version. The method is automatic, although a user may check and correct any OCR errors. A Youtube video from 2010 entitled "Doc scanner - OCR/convert pictures to editable text on iPhone/iPod" describes use of a program which can perform OCR on a photograph of a document, or on a cropped part of the photograph, thereby producing editable text.

Consequently, there is a need for an improved data recognition and Data Conversion process that may recognize, isolate, and extract data from a variety of document templates or formats.

### BRIEF DESCRIPTION OF THE DRAWINGS

For a detailed description of the preferred embodiments of the invention, reference will now be made to the accompanying drawings in which:
Figure 1 is a flow chart of the operation used to capture, record, highlight, and structure data from an image; and
Figure 2 is a screen shoot of the X1, Y1, X2, and Y2 coordinates being captured by the User-Initiated Data Recognition and Data Conversion software.

### BRIEF SUMMARY OF SOME OF THE PREFERRED EMBODIMENTS

These and other needs in the art are addressed in one embodiment by a User-Initiated Data Recognition and Data Conversion Process that comprises an application for a media device that captures, uploads, or obtains an image to structure and save for further use by third parties. It may comprise a User-Initiated Data Recognition and Data Conversion application comprising an interface, a storage server, and an optical character recognition server. The invention is defined by the claims.

One aspect is a method that uses User-Initiated Data Recognition and Data Conversion software for converting unstructured data to structured data. This method comprises capturing a digital representation of a document, uploading the digital representation to an optical character recognition server, scaling the digital representation of the document to provide a scaled digital representation of the document, wherein the scaled digital representation of the document fits a display size of a media device. It also comprises selecting the unstructured data from the scaled digital representation of the document, via a touch interface, populating the selected unstructured data in an electronic record to create structured data, and storing the structured data on a remote server.

In another aspect, a system for using User-Initiated Data Recognition and Data Conversion software for converting unstructured data to structured data may comprise a media device, a physical document, an application comprising an interface, a storage server, and an optical character recognition server. The system may further comprise the media device capturing a digital representation of a document, uploading the digital representation to an optical character recognition server, scaling the digital representation of the document to provide a scaled digital representation of the document, wherein the scaled digital representation of the document fits a display size of the mobile device, selecting unstructured data from the scaled digital representation of the document, via a touch interface, populating the selected unstructured data in an electronic record to create structured data, and storing the structured data on a remote server.

The foregoing has outlined rather broadly the features and technical advantages of the present embodiments in order that the detailed description that follows may be better understood. It should be appreciated by those skilled in the art that the conception and the specific embodiments disclosed may be readily utilized as a basis for modifying or designing other embodiments for carrying out the same purposes of the present invention.

### DETAILED DESCRIPTION OF THE PREFERRED EMBODIMENTS

In embodiments, the User-Initiated Data Recognition and Data Conversion Process may comprise software, a media device, a server, and an optical character recognition server. The media device may be a mobile media device or a stationary media device. Without limitation, examples of a suitable media device may include mobile phones, personal digital assistants, desktop computers, tablets, notebooks, and the like. In embodiments, the media device is a mobile phone. In embodiments, there is an interface on the media device. An interface, a part of the User-Initiated Data Recognition and Data Conversion Process software, may be used on any media device. The interface may provide the user a choice between photographing, scanning, or uploading a record via the User-Initiated Data Recognition and Data Conversion software. It is to be further understood that an interface refers to a Graphical User Interface that allows users to interact with electronic devices through graphical icons and visual indicators.

The record may be any medium containing information and/or data. Records may comprise medical documents, immunization documents, family history documents, bank documents, school documents, or any documents used for information and for data recording purposes. Records may further comprise drawings, photos, notes, handwritten notes, or any combination thereof. The photographed or uploaded document is the original image. The record is saved on the media device or on a device connected to the media device. It is to be understood that connected includes physical connection and/or wireless connection. In embodiments, the original image may then be transferred via the internet, a digital network, wireless network, cabled network, closed network, or any other suitable network or combination thereof to an offsite server. In some embodiments, the original image is transferred to more than one offsite server. In embodiments, the offsite server may be of any type (e.g. cloud based) provided that the offsite server is capable of storing the original or processed images. In embodiments, the original image may be transferred via the internet, a digital network, wireless network, cabled network, closed network, or any other suitable network or combination thereof, directly from the media device or offsite server, to one or more optical character recognition (OCR) servers.

The OCR server(s) processes the original image to produce a processed image, with unstructured data. It is to be understood that an OCR server recognizes numbers, letters, characters, and the like on a record and creates unstructured data that represents the number, letter, character and the like. Unstructured data refers to information that does not have a pre-defined data model or is not organized in a pre-defined manner. The unstructured data may allow a user to manipulate the data in any desirable way for further use. A processed image refers to an image that has been run through the OCR process and has had unstructured text data retrieved from the image. The processed image is returned via the internet, a digital network, wireless network, cabled network, closed network, or any other suitable network or combination thereof to a media device where it may be viewed.

The User-Initiated Data Recognition and Data Conversion software may utilize an algorithm to scale the processed image to the respective screen size of a media or mobile device. In embodiments, the User-Initiated Data Recognition and Data Conversion software utilizes an algorithm to mathematically compute the ratio and scaling of the original image of the processed digital document scaled to the display size of a respective media device. In embodiments, this mathematical computation is stored as the "multiplier." The "multiplier" may be used to scale up or scale down, according to the screen the document is being displayed on.

The processed image may be viewed by the user on their respective media device. The user may be able to reposition the processed image and to "zoom in" or "zoom out" of the viewing perspective of the processed image. A user may "zoom in" using their fingers, touching the screen and sliding the fingers toward each other. "Zooming out" may be accomplished by touching the screen with the user's fingers and sliding the fingers away from each other. Furthermore, "zooming in" and "zooming out" may be accomplished with a peripheral device attached to the media device, such as a mouse. Using the peripheral device functions, the user may increase or decrease the size of the image, such as spinning a mouse wheel forward to increase and backward to decrease the size of the image.

On the media device, a user may highlight or select text, images, or data from the processed image. The user uses a touch interface on the media device to select or highlight the text, images, or data from the processed image.

The area which the user highlights is the boundary box. The user may alter the size and shape of the boundary box to encompass more or less text. This may be accomplished as described above, using the same operation as was used for the "zoom in" and "zoom out" features. Moreover, the position of the boundary box may be moved to select or highlight a new area or selection of text, image, or data.

Once the text selection and highlighting process is complete, the User-Initiated Data Recognition and Data Conversion software may use algorithms to calculate the top, left, right, and bottom coordinates of the boundary box. The algorithm accomplishes such calculation by - defining the top and left coordinates then calculating the width and height of the box and programmatically creating a boundary box. The selected or highlighted text, image, or data made up by the calculated coordinates is therefore defined by the perimeter of the boundary box. The coordinates of the boundary box are then multiplied by the multiplier to reverse the scaling and thus to isolate the original 1:1 image coordinates of the corresponding boundary box coordinates. Once the original image coordinates are calculated, the User-Initiated Data Recognition and Data Conversion software structures the highlighted data out of the unstructured data, and may display the structured data or text. Structured data refers to information that either has a pre-defined data model or is organized in a pre-defined manner. The structured data or text is then used to populate a new electronic document or record. The electronic document or record may be retrievable within the User-Initiated Data Recognition and Data Conversion software. The documents or records may be retrieved by selecting a prompt on the interface. For example, the prompt might indicate, "Records". Selecting this prompt may take the user to a screen or screens for the collection of documents or records from which the user may choose. Choosing a document or record, the User-Initiated Data Recognition and Data Conversion software may access the document or record from a server, on which the document or record is saved.

In the present invention the structured data is stored on a storage server. In further examples of the User-Initiated Data Recognition and Data Conversion Process, the original image, and the processed image, are also stored on servers, or a server. In examples, the original image, the processed image, and the structured data may be recalled or retrieved by a user from the servers at any time. In examples, the original image may be transferred to the OCR servers, the processed image may have text or data selected and isolated, and/or the structured data may be altered or amended at any time after or during storage of the original image, processed image, and/or the structured data.

In the present invention the OCR server or servers process the original image to provide top/left/right/bottom coordinates for each letter of the processed image. (The OCR servers may process the original image to provide top/right/left/bottom coordinates, bottom/left/top/right, left/top/bottom/right coordinates, right/bottom/top/left, or any combination thereof.)

In the present invention, the User-Initiated Data Recognition and Data Conversion software scales the processed image to adjust to the display size of any media device capable of displaying the processed image.

Examples of the User-Initiated Data Recognition and Data Conversion Process may also include that the selected or highlighted text may be populated in real-time, in a modal window within the interface. The modal window may be any viewing window of any size or shape that populates the selected or highlighted text in order to display to the user the portion of the text isolated by the user. In some examples, the modal window may always be present. In other examples, the modal window may only appear once a user has begun the text selection process. The user may be able to confirm the selected data or text once they have finished selecting or highlighting the text. As a further option, the user may be able to confirm their selection via an interface prompt.

In some examples of User-Initiated Data Recognition and Data Conversion Process, the user may be prompted to select a specific type of text according to a category generated by the User-Initiated Data Recognition and Data Conversion software. Such categories may include, but should not be limited to: dates, names, addresses, notes, and the like. In an example, the user may be prompted to isolate medical record data according to the categories of: date of encounter, doctor name, ailment, diagnosis, prescribed medication, and physician/doctor notes, and the like. In alternative examples, the user may be able to select a picture, chart, graph, and the like. In these examples, the user may select text in addition to or at the exclusion of the picture, chart, graph, and the like. In further examples, the user may be able to initiate and label their own categorical prompts. Upon the selection of text for a category, the user may be able to approve of the selection. If the user does not approve, the user may delete the selection and select the data again.

In embodiments of the User-Initiated Data Recognition and Data Conversion Process, the structured data is used to populate an electronic document or record. As an option, the structured data may be searchable. This data may be searchable through a full text search. Full text search refers to the capability to identify natural-language documents that satisfy a query, and optionally to sort them by relevance to the query. In optional examples, the structured data may undergo further processing within the User-Initiated Data Recognition and Data Conversion software. In further optional examples, structured data may be obtained from records used for further processing in other applications. Other applications may include, but are not limited to, applications involving bank records, insurance records, family records, doctor records, house records, cooking records, receipt records, legal records, engineering records, licensing records, and the like. In optional examples, the structured data or the electronic record or document may be transferred to a third party or device (i.e., emailed or faxed from the mobile device to a desired receiver such as a doctor or school). For example, school administration may want to see a child's immunization records. The parent using User-Initiated Data Recognition and Data Conversion software may take a picture of the record, highlight appropriate immunization data, place that data in fields, and save the record. The parent may then send the record as a file by email or any other electronic means to the appropriate administrator. The administrator may then access the file, revealing the record and fields with appropriate immunization information.

Additional examples of User-Initiated Data Recognition and Data Conversion Process include, once all or about all of the data selected by the user has been isolated and retrieved, the user may create a named record for the permanent, structured data document. In embodiments, the original image, the processed image, and the structured data may be stored securely on a remote server. The information may be encrypted. Encryption refers to the process of encoding messages or information in such a way that only authorized parties can read it. In embodiments, the original image, the processed image, and the structured data may be sorted and organized within the interface of the User-Initiated Data Recognition and Data Conversion software. For example, the user may categorize the data according to their personal preferences or by the type of data/record that the user has chosen to create. Prompts may be used to help the user categorize the data according to their personal preferences or by the type of data/record that the user has chosen to create. The image uploaded to the OCR server and data generated by the OCR process may be deleted, while the original image, structured data, and unstructured data may be saved on an offsite server separate and apart from the OCR server.

The User-Initiated Data Recognition and Data Conversion software may be used for recognizing, isolating, and converting data from any document, and to recognize, isolate, and convert data from document types that do not share a common template or format. The User-Initiated Data Recognition and Data Conversion software may be used for unstructured data that, due to inherent formatting variations, may not be converted or may be diffcult to convert to structured data via an automated conventional process. In specific examples, the User-Initiated Data Recognition and Data Conversion software may be used to recognize, isolate, and convert medical data from medical records and documents.

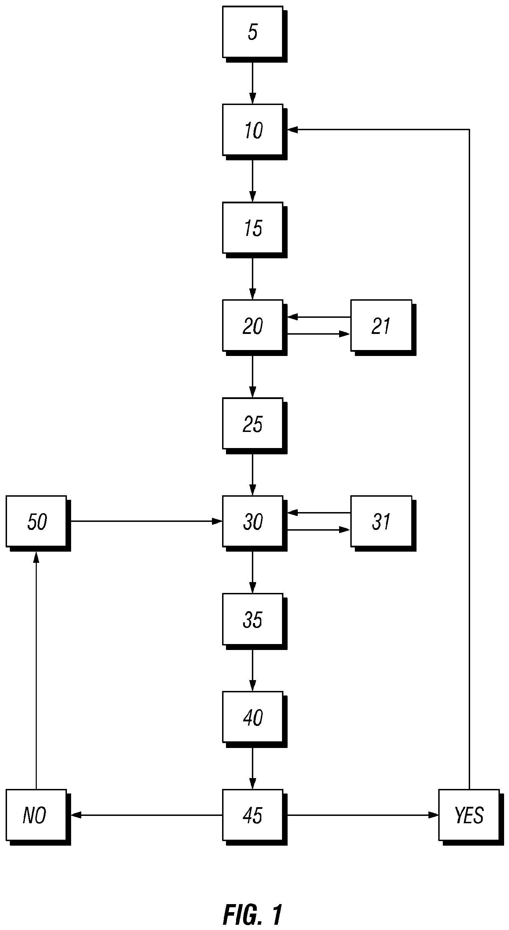

Figure 1 illustrates an example of the operation of the User-Initiated Data Recognition and Data Conversion system. Block 5 is the beginning of the operation when a user photographs, scans, or uploads a record onto a media device. The image uploaded and/or scanned is saved on the media device and sent to a server where the document is saved on the server, block 10. Block 15 represents the image being sent from the server to an OCR server for processing. The OCR server converts the image into unstructured data. The unstructured data is sent back to the user's media device in block 20. Block 21 represents the user "zooming in" or "zooming out" of the document, adjusting the document to fit the display screen. Fields are produced by the User-Initiated Data Recognition and Data Conversion software for the user to fill in block 25. Block 30 is when the user highlights the parts of the image to fill the request fields. Block 31 represents the "multiplier", which reverses the scaling of the image in block 21. Highlighting the different parts of the image turns the unstructured data representing that specific part of the image into structured data, as represented by block 35. The structured and highlighted data is then placed into a designated field in block 40. Block 45 represents the user choosing if the populated fields are correctly populated. If the fields are not correctly populated, for example the wrong information was highlighted, the user may select "No". Selecting "No" moves the operation to block 50, which deletes the selected structured data from the corresponding fields. The operation then reverts back to block 30, where the user highlights the parts of the image to fill the requested field. The operation may be repeated as desired until the field is correctly populated. Once correctly populated, the user may select "Yes" which stores the structured data on a server or media device for further use. Further use may include sending the image and structured data, now associated with specific fields, to doctors, schools, teachers, nurses, and the like for review.

In an example of operation of the User-Initiated Data Recognition and Data Conversion system, a user photographs or uploads a record on to a media device that uses User-Initiated Data Recognition and Data Conversion software. The file created by the record is uploaded via the internet, a network, or wireless network, to a server for storage. The URL, or location of the file on the server, is passed to an Optical Character Recognition (OCR) server for processing. The OCR server processes the image and returns OCR data via the internet, a network, or wireless network in XML format (or other desired format) with top/left/right/bottom coordinates for each letter. The media device, using User-Initiated Data Recognition and Data Conversion software, resizes the original image to fit the media device. An algorithm mathematically computes the ratio and scaling of the original image scaled down to fit on the media device. The scaling is stored as a "multiplier". The resized image is shown to the user.

For example the corresponding unstructured data may include date of encounter, doctor name, ailment, diagnosis, prescribed medication(s), and physician/doctor notes.

Using a touch interface, the user then highlights the data on the original image which is relevant to a field. Once highlighting is complete, the User-Initiated Data Recognition and Data Conversion software uses an algorithm to calculate the top, right, bottom, and left coordinates and create a rectangle around the data. The top, right, bottom, and left coordinates are then multiplied by the "multiplier" that was calculated previously in order to return the top, right, bottom and left coordinates back to the original 1:1 values that the OCR data returned. Once the 1:1 coordinates are calculated, the User-Initiated Data Recognition and Data Conversion software, in real time, returns the XML data returned from the OCR servers that contain the processed text. This text is then populated into the requested field, and the user is prompted to highlight the next field in the list. Once all the fields are populated, a new record is created that saves the data entered and stores the saved data with the associated image that the user uploaded. This record may then be retrieved inside the User-Initiated Data Recognition and Data Conversion software.

Described below are the prompts that a user may see when using the User-Initiated Data Recognition and Data Conversion system software. The user may first download the User-Initiated Data Recognition and Data Conversion software from a third party server to a media device. In other examples, the user may upload the User-Initiated Data Recognition and Data Conversion software from a peripheral device such a CD, USB, or other mass media device. Once the software is loaded, the user may be required to activate the software with an encryption key or password. Activating the software, the user may click "Create a Record Button". The user then has the option to "Photograph Your Record" or "Import Your Electronic Record". Selecting the appropriate option, the software retrieves an image either through a media device camera, through an Image Gallery, or from a computer hard drive. Once the image is selected, it is shown to the user with the User-Initiated Data Recognition and Data Conversion software interface. The user is prompted to highlight the data that corresponds to the first data input field, for example "Date of Encounter". Once the user highlights the text, they are shown the data and may confirm their choice. If they confirm their choice, the data they selected is entered into the input field for the field name. This process is repeated as desired to fill all data input fields. Once the desired input fields are populated, the user may give the record a name, creating a permanent structured data document. The structured data record, the image, and the unstructured OCR data are all saved.

In some examples of the User-Initiated Data Recognition and Data Conversion system, a user may navigate to the "Add Record" page. The user is given the option to choose from "Photograph Your Record" or "Import Your Electronic Record". If the "Photograph Your Record" prompt is chosen, the User-Initiated Data Recognition and Data Conversion software loads the native camera in the media device. If the "Import Your Electronic Record" prompt is chosen, the native "Gallery" is accessed through the media device. This functionality is provided through a framework program.

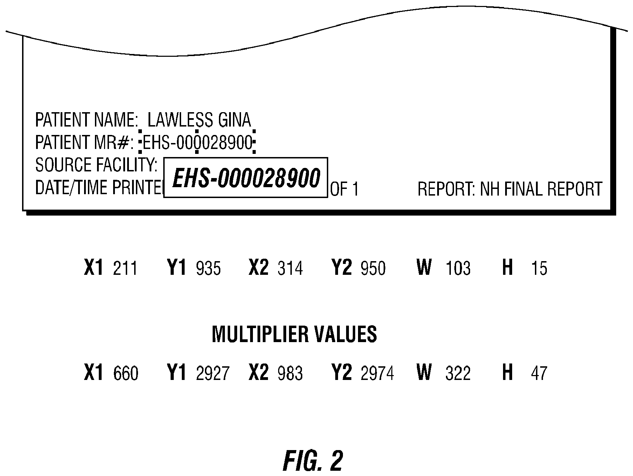

On a desktop computer, the user is given a "File Upload" input field, a HTML functionality. The user photographs a record, uploads the record, or selects the record, and the image file is passed through the framework program. The image is then loaded to the "Add Record" page of the User-Initiated Data Recognition and Data Conversion software, where it is scaled to fit the media device. An algorithm for scaling in the User-Initiated Data Recognition and Data Conversion software is used to calculate how much the image has been scaled down from the original size in order to create a "multiplier" value that may be used to correct the coordinates that the user highlights. The User-Initiated Data Recognition and Data Conversion software prompts the user to highlight the first relevant data field from the selected image. As illustrated in Figure 2, the User-Initiated Data Recognition and Data Conversion software allows the user to highlight an area on the image and return X1, Y1, X2, Y2. The width and height values for the user-defined highlights are X1, Y1, X2, Y2, which define the top, right, bottom, and left coordinates of the user-defined rectangle. Once the user highlights the text, X1, Y1, X2, and Y2 values are multiplied by the previously defined "multiplier" to return the values to the XML documents 1:1 sizing. The X1, Y1, and height coordinates are hence used to identify the selected text. In this example the identified text is displayed below the highlighted area, as illustrated in Figure 2. The user selected data is populated into HTML input fields using a suitable programing language such as JavaScript®. The user further manually inputs the data that is stored in standard HTML input fields. The new record is sent via an API (Application Programming Interface) to a server to be stored as part of the user's account. While an API may be used to transport data between a server and media device, it should be noted that other forms of transfer may be used to transport data between the media device and server. The storage server may be a cloud storage back-end database.

## Claims

1. A user-initiated data recognition and data conversion system for a document, comprises:
a touch interface, wherein the touch interface is disposed on a media device;
a storage server;
an optical character recognition server, wherein the optical character recognition server processes a digital representation of the document, to create unstructured data with top, left, right, and bottom coordinates for each letter;
wherein the media device is adapted to capture (5) the digital representation of the document, wherein the digital representation is an image of the document, and to upload (15) the digital representation of the document to the optical character recognition server to be processed to create the unstructured data, wherein the system is adapted to produce (21) a scaled digital representation of the document using a multiplier to produce an image to fit a display size of the media device,
wherein the touch interface is adapted to enable a user to select (30) a user-defined rectangle, the system determining top, right, bottom, and left coordinates (X1, Y1, X2, Y2) of the user-defined rectangle on the scaled digital representation of the document, and calculating unscaled coordinates based on the multiplier and top, right, bottom, and left coordinates (X1, Y1, X2, Y2) of the user-defined rectangle, and to select unstructured data from the scaled digital representation of the document by retrieving the unstructured data bounded by the unscaled coordinates; and to populate (40) the retrieved data into an electronic record to create structured data;
and wherein the structured data is stored on the storage server.

2. The user-initiated data recognition and data conversion system of claim 1, wherein the structured data is sent to a third party device.

3. A method for converting unstructured data to structured data, comprising:
(A) obtaining (5) a digital representation of a document, wherein the digital representation is an image of the document;
(B) uploading (15) the digital representation to an optical character recognition server, the optical character recognition server creating unstructured data from the digital representation with top, left, right, and bottom coordinates for each letter;
(C) scaling (21) the digital representation of the document to provide a scaled digital representation of the document, the scaling using a multiplier, wherein the scaled digital representation of the document is an image that fits a display size of a media device;
(D) a user selecting (30) a user-defined rectangle on the scaled digital representation of the document, via a touch interface;
(E) automatically determining top, right, bottom and left coordinates (X1, Y1, X2, Y2) of the user-defined rectangle;
(F) automatically reversing (31) the scaling of the user-defined rectangle using the multiplier to provide a 1:1 sizing with unscaled coordinates;
(G) selecting unstructured data from the scaled digital representation of the document by retrieving the unstructured data bounded by the unscaled coordinates, which provides retrieved data;
(H) populating (40) the retrieved data in an electronic record to create (35) structured data; and
(I) storing the structured data on a remote server.

4. The method of claim 3, wherein capturing (5) a digital representation of a document is accomplished by a mobile device.

5. The method of claim 3, further comprising placing the structured data into a plurality of fields for the user to view.

6. The method of claim 5, further comprising accepting or removing the structured data that has been placed into fields.

7. The method of claim 6, further comprising storing the accepted structured data on a mobile device.

8. The method of claim 6, further comprising selecting additional structured data after the field has been removed of previously selected structured data.

9. The method of claim 3, further comprising scaling up or down structured data with the multiplier.

10. The method of claim 3 wherein the unstructured data created by the optical character recognition server provides top/left/right/bottom coordinates for each letter.

## Patentansprüche

1. Benutzerinitiiertes Datenerkennungs- und Datenkonvertierungssystem für ein Dokument, das Folgendes umfasst:
eine Berührungsschnittstelle, wobei die Berührungsschnittstelle auf einem Mediengerät angeordnet ist;
einen Speicherserver;
einen optischen Zeichenerkennungsserver, wobei der optische Zeichenerkennungsserver eine digitale Darstellung des Dokuments verarbeitet, um unstrukturierte Daten mit oberen, linken, rechten und unteren Koordinaten für jeden Buchstaben zu erzeugen;
wobei das Mediengerät zum Erfassen (5) der digitalen Darstellung des Dokuments, wobei die digitale Darstellung ein Bild des Dokuments ist, und zum Hochladen (15) der digitalen Darstellung des Dokuments auf den optischen Zeichenerkennungsserver ausgelegt ist, um zum Erzeugen der unstrukturierten Daten verarbeitet zu werden, wobei das System zum Produzieren (21) einer skalierten digitalen Darstellung des Dokuments mittels eines Vervielfachers ausgelegt ist, um ein Bild zu produzieren, das zu einer Anzeigegröße des Mediengeräts passt,
wobei die Berührungsschnittstelle ausgelegt ist, um es einem Benutzer zu ermöglichen, ein benutzerdefiniertes Rechteck auszuwählen (30), wobei das System obere, rechte, untere und linke Koordinaten (X1, Y1, X2, Y2) des benutzerdefinierten Rechtecks auf der skalierten digitalen Darstellung des Dokuments bestimmt und unskalierte Koordinaten auf der Basis des Vervielfachers und der oberen, rechten, unteren und linken Koordinaten (X1, Y1, X2, Y2) des benutzerdefinierten Rechtecks zu berechnen und unstrukturierte Daten aus der skalierten digitalen Darstellung des Dokuments durch Abrufen der durch die unskalierten Koordinaten begrenzten unstrukturierten Daten auszuwählen; und die abgerufenen Daten in einen elektronischen Datensatz zu setzen (40), um strukturierte Daten zu erzeugen;
und wobei die strukturierten Daten auf dem Speicherserver gespeichert werden.

2. Benutzerinitiiertes Datenerkennungs- und Datenkonvertierungssystem nach Anspruch 1, bei dem die strukturierten Daten an ein Drittgerät gesendet werden.

3. Verfahren zur Konvertierung unstrukturierter Daten in strukturierte Daten, das Folgendes beinhaltet:
(A) Einholen (5) einer digitalen Darstellung eines Dokuments, wobei die digitale Darstellung ein Bild des Dokuments ist;
(B) Hochladen (15) der digitalen Darstellung auf einen optischen Zeichenerkennungsserver, wobei der optische Zeichenerkennungsserver unstrukturierte Daten aus der digitalen Darstellung mit oberen, linken, rechten und unteren Koordinaten für jeden Buchstaben erzeugt;
(C) Skalieren (21) der digitalen Darstellung des Dokuments, um eine skalierte digitale Darstellung des Dokuments bereitzustellen, wobei die Skalierung einen Vervielfacher verwendet, wobei die skalierte digitale Darstellung des Dokuments ein Bild ist, das zu einer Anzeigegröße eines Mediengeräts passt;
(D) Auswählen (30) über eine Berührungsschnittstelle, durch einen Benutzer, eines benutzerdefinierten Rechtecks auf der skalierten digitalen Darstellung des Dokuments;
(E) automatisches Bestimmen der oberen, rechten, unteren und linken Koordinaten (X1, Y1, X2, Y2) des benutzerdefinierten Rechtecks;
(F) automatisches Umkehren (31) der Skalierung des benutzerdefinierten Rechtecks mittels des Vervielfachers, um eine 1:1-Größenbestimmung mit unskalierten Koordinaten zu erhalten;
(G) Auswählen unstrukturierter Daten aus der skalierten digitalen Darstellung des Dokuments durch Abrufen der durch die unskalierten Koordinaten begrenzten unstrukturierten Daten, so dass abgerufene Daten erhalten werden;
(H) Einsetzen (40) der abgerufenen Daten in einen elektronischen Datensatz, um strukturierte Daten zu erzeugen (35); und
(I) Speichern der strukturierten Daten auf einem entfernten Server.

4. Verfahren nach Anspruch 3, wobei das Erfassen (5) einer digitalen Darstellung eines Dokuments durch ein mobiles Gerät erfolgt.

5. Verfahren nach Anspruch 3, das ferner das Platzieren der strukturierten Daten in mehrere Felder beinhaltet, die der Benutzer einsehen kann.

6. Verfahren nach Anspruch 5, das ferner das Akzeptieren oder Entfernen der strukturierten Daten beinhaltet, die in Felder gesetzt wurden.

7. Verfahren nach Anspruch 6, das ferner das Speichern der akzeptierten strukturierten Daten auf einem mobilen Gerät beinhaltet.

8. Verfahren nach Anspruch 6, das ferner das Auswählen zusätzlicher strukturierter Daten beinhaltet, nachdem zuvor ausgewählte strukturierte Daten aus dem Feld entfernt wurden.

9. Verfahren nach Anspruch 3, das ferner das Herauf- oder Herunterskalieren strukturierter Daten mit dem Vervielfacher beinhaltet.

10. Verfahren nach Anspruch 3, bei dem die von dem optischen Zeichenerkennungsserver erzeugten unstrukturierten Daten die oberen/linken/rechten/unteren Koordinaten für jeden Buchstaben liefern.

## Revendications

1. Système de reconnaissance de données et de conversion de données lancé par un utilisateur pour un document,
comprenant :
une interface tactile, dans lequel l'interface tactile est disposée sur un dispositif de média ;
un serveur de stockage ;
un serveur de reconnaissance optique de caractères, dans lequel le serveur de reconnaissance optique de caractères traite une représentation numérique du document, pour créer des données non structurées avec des coordonnées haut, gauche, droite, et bas pour chaque lettre ;
dans lequel le dispositif de média est conçu pour capturer (5) la représentation numérique du document, dans lequel la représentation numérique est une image du document, et pour télécharger (15) la représentation numérique du document vers le serveur de reconnaissance optique de caractères pour qu'elle soit traitée pour créer les données non structurées, dans lequel le système est conçu pour produire (21) une représentation numérique mise à l'échelle du document en utilisant un multiplicateur pour produire une image pour qu'elle corresponde à une dimension d'affichage du dispositif de média,
dans lequel l'interface tactile est conçue pour permettre à un utilisateur de sélectionner (30) un rectangle défini par un utilisateur, le système déterminant des coordonnées haut, droite, bas, et gauche (X1, Y1, X2, Y2) du rectangle défini par un utilisateur sur la représentation numérique mise à l'échelle du document, et calculant des coordonnées non mises à l'échelle sur la base du multiplicateur et des coordonnées haut, droite, bas, et gauche (X1, Y1, X2, Y2) du rectangle défini par un utilisateur, et pour sélectionner des données non structurées à partir de la représentation numérique mise à l'échelle du document en extrayant les données non structurées liées par les coordonnées non mises à l'échelle ; et pour introduire (40) les données extraites sur un enregistrement électronique pour créer des données structurées ;
et dans lequel les données structurées sont stockées sur le serveur de stockage.

2. Système de reconnaissance de données et de conversion de données lancé par un utilisateur selon la revendication 1, dans lequel les données structurées sont envoyées par un dispositif tiers.

3. Procédé destiné à convertir des données non structurées en données structurées, comprenant :
(A) l'obtention (5) d'une représentation numérique d'un document, dans lequel la représentation numérique est une image du document ;
(B) le téléchargement (15) de la représentation numérique vers un serveur de reconnaissance optique de caractères, le serveur de reconnaissance optique de caractères créant des données non structurées à partir de la représentation numérique avec des coordonnées haut, gauche, droite, et bas pour chaque lettre ;
(C) la mise à l'échelle (21) de la représentation numérique du document pour fournir une représentation numérique mise à l'échelle du document, la mise à l'échelle utilisant un multiplicateur, dans lequel la représentation numérique mise à l'échelle du document est une image qui correspondant à une dimension d'affichage d'un dispositif de média ;
(D) la sélection par un utilisateur (30) d'un rectangle défini par un utilisateur sur la représentation numérique mise à l'échelle du document, via une interface tactile ;
(E) la détermination automatique de coordonnées haut, droite, bas et gauche (X1, Y1, X2, Y2) du rectangle défini par un utilisateur ;
(F) l'inversement automatique (31) de la mise à l'échelle du rectangle défini par un utilisateur en utilisant le multiplicateur pour fournir un dimensionnement 1/1 avec des coordonnées non mises à l'échelle ;
(G) la sélection de données non structurées à partir de la représentation numérique mise à l'échelle du document en extrayant les données non structurées liées par les coordonnées non mises à l'échelle, qui fournit des données extraites ;
(H) l'introduction (40) des données extraites dans un enregistrement électronique pour créer (35) des données structurées ; et
(I) le stockage des données structurées sur un serveur distant.

4. Procédé selon la revendication 3, dans lequel la capture (5) d'une représentation numérique d'un document est accomplie par un dispositif mobile.

5. Procédé selon la revendication 3, comprenant en outre la mise en place des données structurées dans une pluralité de champs destinés à être visionnés par l'utilisateur.

6. Procédé selon la revendication 5, comprenant en outre l'acceptation ou le retrait des données structurées qui ont été mises en place dans des champs.

7. Procédé selon la revendication 6, comprenant en outre le stockage des données structurées acceptées sur un dispositif mobile.

8. Procédé selon la revendication 6, comprenant en outre la sélection de données structurées supplémentaires après que les données structurées sélectionnées précédemment ont été retirées du champ.

9. Procédé selon la revendication 3, comprenant en outre la mise à l'échelle à la hausse ou à la baisse de données structurées avec le multiplicateur.

10. Procédé selon la revendication 3 dans lequel les données non structurées créées par le serveur de reconnaissance optique de caractères fournissent des coordonnées haut/gauche/droit/bas pour chaque lettre.
